# EUROPÄISCHE PATENTSCHRIFT

(11) **EP 1 972 822 B1**
(45) Veröffentlichungstag und Bekanntmachung des Hinweises auf die Patenterteilung: **07.04.2010**
(21) Anmeldenummer: 08101899.6
(22) Anmeldetag: 22.02.2008
(51) Int. Cl.: F16D 55/226, F16D 65/21

(54) **Keilbremse**
Wedge brake
Frein à cale

(30) Priorität: 20.03.2007 DE 102007013421
(43) Veröffentlichungstag der Anmeldung: 24.09.2008
(73) Patentinhaber: SIEMENS AKTIENGESELLSCHAFT, 80333 München (DE)
(72) Erfinder: Herr, Michael, 90402, Nürnberg (DE)

(56) Entgegenhaltungen:
- EP-A- 1 650 463
- WO-A-2007/113033
- DE-A1- 10 307 224
- DE-A1- 10 328 242

## Beschreibung

Die Erfindung betrifft eine Bremseinrichtung mit einem mittels eines Keilmechanismus betätigbaren Bremsklotz, wobei der Keilmechanismus einen ersten und einen zweiten Keilkörper mit jeweils mindestens einer keilartig abgeschrägten Anlagefläche hat und die Anlageflächen des ersten und des zweiten Keilkörpers einander gegenüberliegen, der Bremsklotz an einer von der Anlagefläche abgewandten Seite des ersten Keilkörpers unter Ausbildung einer starren Verbindung angebracht ist und der erste Keilkörper in einer Längsrichtung relativ zu dem zweiten Keilkörper hin und her bewegbar ist, so dass sich der Bremsklotz aufgrund der Keilwirkung der abgeschrägten Anlageflächen in einer zur Längsrichtung senkrechten Querrichtung auf ein zu bremsendes Element zu bzw. von dem zu bremsenden Element weg bewegt.

Eine derartige beispielsweise aus der DE 198 19 564 A1 bekannte Bremseinrichtung ist insbesondere zum Einsatz Kraftfahrzeugen oder in der industriellen Antriebstechnik vorgesehen. Der Bremsklotz kann aufgrund der Keilwirkung mit nur sehr geringem Kraftaufwand gegen das zu bremsende Element, z.B. eine Bremsscheibe, gepresst werden. Ein Teil der Anpresskraft (= Bremskraft) zwischen dem Bremsklotz und der Bremsscheibe wird aufgrund der Keilwirkung aus der Bewegung der Bremsscheibe gewonnen. Es kommt sehr schnell zu einer günstigen Selbstverstärkung der Bremswirkung, so dass mit geringem Aufwand eine sehr hohe Bremskraft erzeugt werden kann.

Die DE 103 07 224 A1 beschreibt eine Servobremse, bei der eine Bremskraft in einen keilförmigen Schieber eingeleitet wird, der die eingeleitete Kraft über Schrägen umlenkt und schließlich unterstützt von der Druckkraft einer Bremsfeder Bremsbacken einer Reibebremse gegen einen abzubremsenden Bremskörper presst.

Die DE 103 28 242 A1 beschreibt eine Keilbremse für Kraftfahrzeuge, bei der ein erster Keilkörper fest mit einem Bremsbelag oder Bremsklotz verbunden ist. Dem Bremsklotz liegt eine abzubremsende Masse gegenüber. Innerhalb des Bremsklotzes ist ein in Querrichtung verschiebbares Zusatzteil angeordnet, das mittels eines Piezoelementes in Reibschluss zu der abzubremsenden Masse gebracht werden kann. Aufgrund des Reibschlusses nimmt die sich beispielsweise drehende Bremsscheibe den Bremsklotz und den ersten Keilkörper mit, wobei es aufgrund des keilförmigen Widerlagers, an welchem der Bremsklotz formschlüssig anliegt, zu einer Selbstverstärkung kommt. Das Piezoelement leitet die Bewegung in Querrichtung ein.

Die EP 1 650 463 A1 beschreibt eine Bremsvorrichtung mit einem künstlichen Muskel, wobei der künstliche Muskel beispielsweise aus einem Material mit Formgedächtnis besteht.

Bei den bekannten Bremseinrichtungen wird zur Hin- und Herbewegung des ersten Keilkörpers mindestens ein Elektromotor in Verbindung mit einem (Schnecken-)Getriebe eingesetzt. Letzteres setzt die Rotationsbewegung des Elektromotors in die zur Erzielung der Bremskraftwirkung erforderliche Linearbewegung um. Dies ist aufwändig.

Die Aufgabe der Erfindung besteht deshalb darin, eine Bremseinrichtung der eingangs bezeichneten Art anzugeben, bei der die Keilkörper mit einfachen Mitteln relativ zueinander bewegt werden können.

Diese Aufgabe wird gelöst durch die Merkmale des unabhängigen Patentanspruchs 1. Die erfindungsgemäße Bremseinrichtung zeichnet sich dadurch aus, dass zur Hin- und Herbewegung des ersten Keilkörpers in der Längsrichtung mindestens ein mechanisch mit dem ersten Keilkörper verbundener drehbewegungsfreier Linearaktor vorgesehen ist.

Der erfindungsgemäß vorgesehene drehbewegungsfreie Linearaktor ersetzt also die Kombination aus dem Elektromotor mit rotierender Welle und dem (Schnecken-)Getriebe. Der Linearaktor liefert die zur Betätigung der Bremseinrichtung benötigte Längs- oder Linearbewegung unmittelbar selbst, so dass eine Bewegungsumsetzung von einer Rotations- auf eine Linearbewegung entfällt. Dadurch vereinfacht sich der Aufbau erheblich. Die erfindungsgemäße Bremseinrichtung kommt ohne die aufwändige Mechanik aus, die bislang insbesondere für das Getriebe benötigt wurde. Es werden weniger mechanisch bewegte Teile eingesetzt, so dass sich Verschmutzungsanfälligkeit und Verschleiß verringern. Die Bremseinrichtung ist besonders wartungsarm. Außerdem sinken das Bauvolumen und das Gewicht.

Für die Realisierung des Linearaktors kann auf eine Reihe e-tablierter und verfügbarer technischer Ausführungsformen zurückgegriffen werden. Die genaue Ausgestaltung des Linearaktors richtet sich nach den Anforderungen des jeweiligen Einzelfalls, wie z.B. nach der erforderlichen Verstellwegstrecke, -geschwindigkeit und/oder nach den erforderlichen Verstellkräften.

Vorteilhafte Ausgestaltungen der erfindungsgemäßen Bremseinrichtung ergeben sich aus den Merkmalen der von Anspruch 1 abhängigen Ansprüche.

Günstig ist eine Variante, bei der der Linearaktor als Piezoantrieb ausgeführt ist. So können schnelle Reaktionszeiten und auch große Antriebskräfte erreicht werden.

Gemäß einer anderen bevorzugten Variante ist der Linearaktor als auf einem elektroaktiven Polymer (EAP) basierender Antrieb ausgeführt. Dies erlaubt die Realisierung großer Verschiebestrecken.

Vorzugsweise kann der Linearaktor außerdem als auf einer Formgedächtnislegierung (Shape Memory Alloy = SMA) basierender Antrieb ausgeführt sein. Insbesondere kann es sich hierbei auch um eine magnetische Formgedächtnislegierung (Magnetic Shape Memory = MSM) handeln.

Bei einer weiteren günstigen Ausgestaltung ist der Linearaktor als linearelektromagnetischer Antrieb ausgeführt. Hierbei handelt es sich um eine etablierte und gut erprobte Antriebsart.

Weitere Merkmale, Vorteile und Einzelheiten der Erfindung ergeben sich aus der nachfolgenden Beschreibung von Ausführungsbeispielen anhand der Zeichnung. Es zeigt:
- FIG 1 und 2: ein schematisiert dargestelltes Ausführungsbeispiel einer Bremseinrichtung mit einem Keilmechanismus in gelöster und in bremsender Stellung und
- FIG 3: ein weiteres Ausführungsbeispiel einer mit einem Keilmechanismus ausgestatteten Bremseinrichtung unter Verwendung drehbewegungsfreier Linearaktoren.

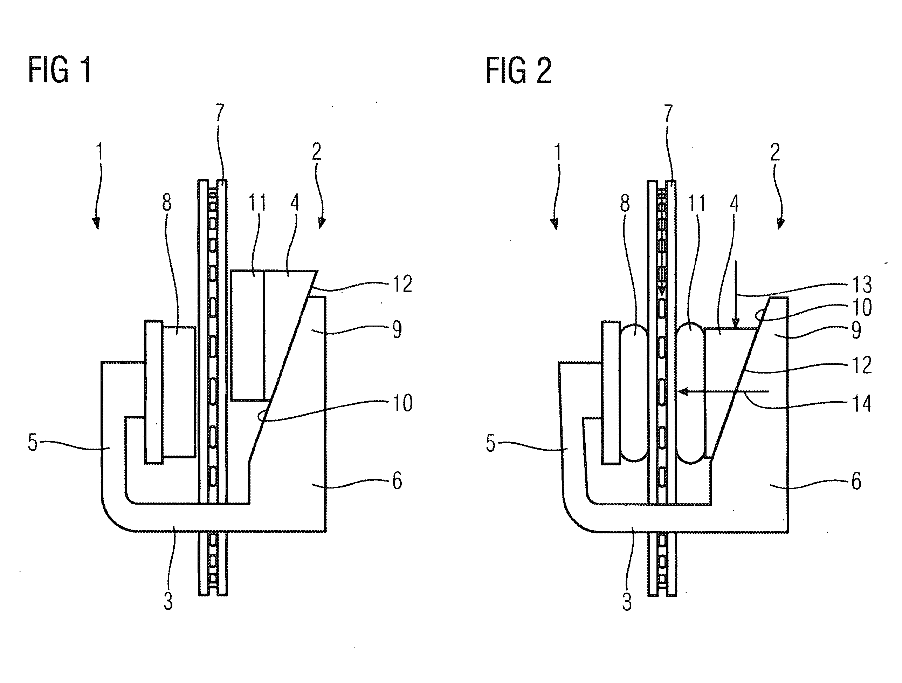

Einander entsprechende Teile sind in FIG 1 bis 3 mit denselben Bezugszeichen versehen.

In FIG 1 und 2 ist ein Ausführungsbeispiel einer Bremseinrichtung 1 gezeigt. Sie ist mit einem Keilmechanismus 2 ausgestattet. Aus der Prinzipdarstellung gemäß FIG 1 geht die grundsätzliche Wirkungsweise einer solchen Keilbremse hervor.

Der Keilmechanismus 2 umfasst zwei Keilkörper 3 und 4, von denen der Keilkörper 3 als Bremszange ausgebildet ist, der mit seinen beiden Zangenarmen 5 und 6 eine Bremsscheibe 7 umgreift. An seinem der Bremsscheibe 7 zugewandten Ende ist der Zangenarm 5 mit einem Bremsklotz 8 versehen. Der andere Zangenarm 6 mündet in einen Keilabschnitt 9 mit einer der Bremsscheibe 7 zugewandten schrägen Anlagefläche 10.

Der zweite Keilkörper 4 ist im Zwischenraum zwischen der Bremsscheibe 7 und der Anlagefläche 10 angeordnet. An seiner der Bremsscheibe 7 zugewandten Seite ist auch er mit einem Bremsklotz 11 versehen. An der hiervon abgewandten Rückseite hat der Keilkörper 4 ein keilförmiges Rückenprofil mit einer ebenfalls schrägen Anlagefläche 12. Die Anlageflächen 10 und 12 liegen einander gegenüber. Beim Ausführungsbeispiel gemäß FIG 1 und 2 liegen sie sogar unmittelbar aneinander an. Sie bilden jeweils eine schiefe Ebene mit betragsmäßig gleichem aber entgegengesetzt orientiertem Neigungswinkel.

Im ungebremsten Zustand gemäß FIG 1 berühren die Bremsklötze 8 und 11 die sich drehende Bremsscheibe 7 nicht. Der Keilkörper 4 ragt ein Stück weit aus dem Zwischenraum zwischen der Bremsscheibe 7 und der Anlagefläche 10 heraus.

Der Keilkörper 4 ist mittels eines in FIG 1 und 2 nicht mit dargestellten Linearaktors in einer Längsrichtung 13 hin und her bewegbar. Ein durch den Linearaktor vorgegebener Vorschub in Längsrichtung 13 bewegt den Keilkörper 4 längs der schrägen Anlagefläche 10. Aufgrund der Keilwirkung geht die Bewegung in Längsrichtung 13 mit einer Bewegung in einer dazu senkrechten Querrichtung 14 einher. Diese Querbewegung presst den Keilkörper 4 mit dem Bremsklotz 11 gegen die Bremsscheibe 7. Ist dieser Bremsvorgang erst einmal durch den Linearaktor initiiert, wird der Keilkörper 4 aufgrund der Rotation der Bremsscheibe 7 mitgenommen und weiter in den Zwischenraum zwischen der Bremsscheibe 7 und der Anlagefläche 10 hinein gezogen (siehe FIG 2). Es tritt also ein sich selbst verstärkender Effekt auf, der eine sehr hohe Bremskraftwirkung ermöglicht.

Die Bremseinrichtung 1 ist elektronisch geregelt. Messwerte des aktuellen Bremsmoments werden erfasst und einer Regelungseinheit zugeführt. Letztere sorgt dafür, dass der Keilkörper 4 (= Bremskeil) mittels des entsprechend angesteuerten Linearaktors genau in der Stellung gehalten wird, in der die erwünschte Bremswirkung gegeben ist.

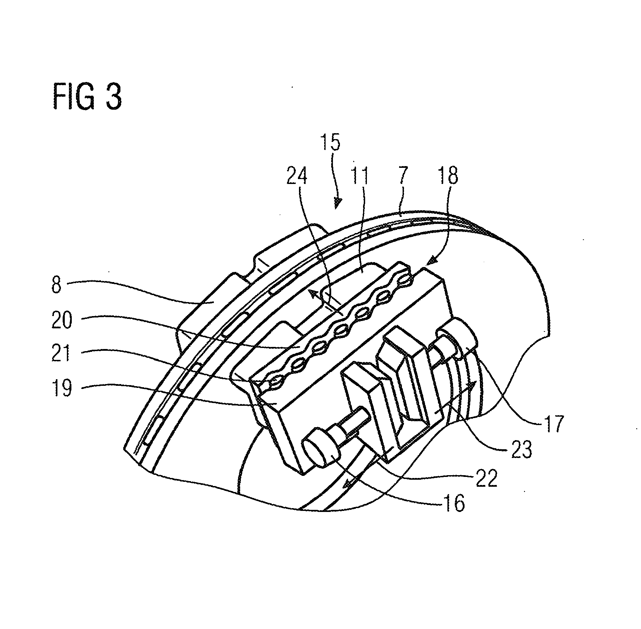

In FIG 3 ist ein weiteres Ausführungsbeispiel einer Bremseinrichtung 15 gezeigt, die einen mittels zweier drehbewegungsfreier Linearaktoren 16 und 17 angetriebenen Keilmechanismus 18 aufweist. Die grundsätzliche Funktionsweise der Bremseinrichtung 15 entspricht der der Bremseinrichtung 1. Insbesondere beruht auch die Bremswirkung der Bremseinrichtung 15 auf dem vorteilhaften Keileffekt.

Allerdings ist der Keilmechanismus 18 etwas anders aufgebaut als der Keilmechanismus 2 der in FIG 1 und 2 gezeigten Bremseinrichtung 1. Auch der Keilmechanismus 18 umfasst zwei Keilkörper 19 und 20, die aber im Unterschied zu der Ausführungsform gemäß FIG 1 und 2 nicht unmittelbar aneinander anliegen. Die Keilkörper 19 und 20 sind als Lagerhälften eines Rollenlagers ausgebildet und stehen nur mittelbar miteinander in Kontakt. Zwischen ihnen sind zylinder- oder rollenförmige Wälzkörper 21 platziert. Jede Lagerhälfte ist mit V-förmigen Nuten zur Aufnahme und Führung der Wälzkörper 21 versehen. Die V-förmigen Nuten haben schräg verlaufende Seitenwände, an denen die Wälzkörper 21 anliegen. Die schrägen Seitenwände bilden die keilförmigen Anlageflächen, längs derer die Keilkörper 19 und 20 relativ zueinander verschiebbar sind. Aufgrund der Wälzkörper 21 ist diese Relativbewegung beim Ausführungsbeispiel gemäß FIG 3 nicht durch eine Gleitreibung, sondern durch eine Rollreibung bestimmt.

Die in den Keilkörper 19 und 20 zur Aufnahme der Wälzkörper 21 vorgesehenen Nuten können auch eine von der exakten V-Form leicht abweichende Form haben. Insbesondere können die Seitenwände auch eine geringfügige Krümmung aufweisen. So lässt sich der Bremskraftverlauf in besonderer Weise einstellen.

Jedenfalls haben die Nuten aber zwei Seitenwände, so dass sich die Wälzkörper 21 unabhängig davon, in welche der beiden Längsrichtungen 22 und 23 eine Relativverschiebung zwischen den Keilkörpern 19 und 20 erfolgt, stets längs schräger Anlageflächen bewegen. Bei der Bremseinrichtung 15 tritt die günstige Keilwirkung also bei Relativverschiebungen in beiden Längsrichtungen 22 und 23 auf. Jede derartige Längsverschiebung ruft aufgrund der Keilwirkung auch eine Bewegungskomponente in einer dazu senkrechten Querrichtung 24 hervor, so dass sich die erwünschte Bremskraftwirkung einstellt. Die Bremseinrichtung 15 ermöglicht folglich eine für beide Drehrichtungen gleichermaßen gute Bremsung der Bremsscheibe 7.

Der äußere Keilkörper 19 ist beim Ausführungsbeispiel gemäß FIG 3 ortsfest. Er ist ähnlich wie beim Ausführungsbeispiel gemäß FIG 1 und 2 mechanisch mit dem Bremsklotz 8 verbunden. Dagegen ist der innen liegende Keilkörper 20 mechanisch mit den beiden Linearaktoren 16 und 17 gekoppelt. Der Keilkörper 20 lässt sich synchron zum Linearvorschub des Linearaktors 16 oder 17 in die Längsrichtung 22 bzw. 23 bewegen. Da die Linearaktoren bereits eine axiale Bewegung in die Längsrichtungen 22 und 23 bewirken, ist keine Umsetzung von einer Drehin eine Linearbewegung erforderlich. Die Linearaktoren 16 und 17 sind beim Ausführungsbeispiel jeweils als hoch präziser Piezo-Antrieb ausgeführt.

Befindet sich die Bremseinrichtung 15 in der Stellung, in der der Anpressdruck der Bremsklötze 8 und 11 gegen die Bremsscheibe 7 in etwa dem gerade gewünschten Wert entspricht, wird der Keilkörper 20 mittels der auch bei diesem Ausführungsbeispiel vorgesehenen, aber in FIG 3 nicht mit dargestellten Regelungseinheit und der Linearaktoren 16 und 17 nur noch im Bereich weniger Mikrometer in den Längsrichtungen 22 und 23 hin und her bewegt. Die Reaktionszeit der verwendeten Linearaktoren 16 und 17 liegt hierbei im Millisekundenbereich.

## Patentansprüche

1. Bremseinrichtung mit einem mittels eines Keilmechanismus (2; 18) betätigbaren Bremsklotz (11), wobei
a) der Keilmechanismus (2; 18) einen ersten und einen zweiten Keilkörper (3, 4; 19, 20) mit jeweils mindestens einer keilartig abgeschrägten Anlagefläche (10, 12) hat und die Anlageflächen (10, 12) des ersten und des zweiten Keilkörpers (3, 4; 19, 20) einander gegenüberliegen,
b) der Bremsklotz (11) an einer von der Anlagefläche (12) abgewandten Seite des ersten Keilkörpers (4; 20) unter Ausbildung einer starren Verbindung angebracht ist,
c) der erste Keilkörper (4; 20) in einer Längsrichtung (13; 22, 23) relativ zu dem zweiten Keilkörper (3; 19) hin und her bewegbar ist, so dass sich der Bremsklotz (11) aufgrund der Keilwirkung der abgeschrägten Anlageflächen (10, 12) in einer zur Längsrichtung (13; 22, 23) senkrechten Querrichtung (14; 24) auf ein zu bremsendes Element (7) zu bzw. von dem zu bremsenden Element (7) weg bewegt,
**dadurch gekennzeichnet, dass**
d) zur Hin- und Herbewegung des ersten Keilkörpers (4; 20) in der Längsrichtung (13; 22, 23) mindestens ein mechanisch mit dem ersten Keilkörper (4; 20) verbundener drehbewegungsfreier Linearaktor (16, 17) vorgesehen ist.

2. Bremseinrichtung nach Anspruch 1, **dadurch gekennzeichnet, dass** der Linearaktor als Piezoantrieb (16, 17) ausgeführt ist.

3. Bremseinrichtung nach Anspruch 1, **dadurch gekennzeichnet, dass** der Linearaktor (16, 17) als auf einem elektroaktiven Polymer basierender Antrieb ausgeführt ist.

4. Bremseinrichtung nach Anspruch 1, **dadurch gekennzeichnet, dass** der Linearaktor (16, 17) als auf einer insbesondere magnetischen Formgedächtnislegierung basierender Antrieb ausgeführt ist.

5. Bremseinrichtung nach Anspruch 1, **dadurch gekennzeichnet, dass** der Linearaktor (16, 17) als linearelektromagnetischer Antrieb ausgeführt ist.

## Claims

1. Braking device having a brake block (11) which can be actuated by means of a wedge mechanism (2; 18), wherein
a) the wedge mechanism (2; 18) has a first and a second wedge element (3, 4; 19, 20) each having at least one contact face (10, 12) bevelled in the manner of a wedge, and the contact faces (10, 12) of the first and of the second wedge element (3, 4; 19, 20) are opposite one another,
b) the brake block (11) is fitted to a side of the first wedge element (4; 20) which is remote from the contact face (12), with a rigid connection being formed,
c) the first wedge element (4; 20) can be moved in reciprocating fashion in a longitudinal direction (13; 22, 23) relative to the second wedge element (3; 19) so that the brake block (11), owing to the wedge action of the beveled contact faces (10, 12), in a transverse direction (14; 24) perpendicular to the longitudinal direction (13; 22, 23), moves toward an element (7) to be braked or away from the element (7) to be braked,
**characterized in that**
d) at least one linear actuator (16, 17), which is free from rotational movement and is mechanically connected to the first wedge element (4; 20), is provided in order to move the first wedge element (4; 20) in reciprocating fashion in the longitudinal direction (13; 22, 23).

2. Braking device according to Claim 1, **characterized in that** the linear actuator is designed as a piezo drive (16, 17).

3. Braking device according to Claim 1, **characterized in that** the linear actuator (16, 17) is designed as a drive based on an electrically active polymer.

4. Braking device according to Claim 1, **characterized in that** the linear actuator (16, 17) is designed as a drive based on an in particular magnetic shape memory alloy.

5. Braking device according to Claim 1, **characterized in that** the linear actuator (16, 17) is designed as a linear electromagnetic drive.

## Revendications

1. Dispositif de freinage comprenant un sabot ( 1 ) de frein pouvant être actionné par un mécanisme ( 2 ; 18 ) à coin, dans lequel :
a) le mécanisme ( 2 ; 18 ) à coin a un premier et un deuxième corps ( 3, 4 ; 19, 20 ) de coin ayant respectivement au moins une surface ( 10, 12 ) de contact biseautée à la manière d'un coin et les surfaces ( 10, 12 ) de contact du premier et du deuxième corps ( 3, 4 ; 19, 20 ) de coin sont opposées l'une à l'autre,
b) le sabot ( 11 ) de frein est appliqué avec formation d'une liaison rigide sur un côté du premier corps ( 4 ; 20 ) de coin, qui est opposé à la surface ( 12 ) de contact,
c) le premier corps ( 4 ; 20 ) de coin peut aller et venir par rapport au deuxième corps ( 3 ; 19 ) dans une direction ( 13 ; 22, 23 ) longitudinale, de sorte que le sabot ( 11 ) de frein se rapproche d'un élément ( 7 ) freinant ou s'éloigne de l'élément ( 7 ) freinant en raison de l'effet de coin des surfaces ( 10, 12 ) de contact biseautées, dans une direction ( 14 ; 24 ) transversale perpendiculaire à la direction ( 13 ; 22, 23 ) longitudinale,
**caractérisé en ce que**
d) il est prévu pour le mouvement d'aller et retour du premier corps ( 4 ; 20 ) de coin dans la direction ( 13 ; 22, 23 ) longitudinale au moins un actionneur ( 16, 17 ) linéaire, sans mouvement de rotation et relié mécaniquement au premier corps ( 4 ; 20 ) de coin.

2. Dispositif de freinage suivant la revendication 1, **caractérisé en ce que** l'actionneur linéaire est réalisé sous la forme d'un entraînement ( 16, 17 ) piézoélectrique.

3. Dispositif de freinage suivant la revendication 1, **caractérisé en ce que** l'actionneur ( 16, 17 ) linéaire est réalisé sous la forme d'un entraînement à base d'un polymère électroactif.

4. Dispositif de freinage suivant la revendication 1, **caractérisé en ce que** l'actionneur ( 16, 17 ) linéaire est réalisé sous la forme d'une entraînement à base d'un alliage à mémoire de forme, notamment magnétique.

5. Dispositif de freinage suivant la revendication 1, **caractérisé en ce que** l'actionneur ( 16, 17 ) linéaire est réalisé sous la forme d'un entraînement électromagnétique linéaire.
